Europäisches Patentamt

European Patent Office

Office européen des brevets

(11) Publication number: **0 188 334**
**B1**

# EUROPEAN PATENT SPECIFICATION

(45) Date of publication of patent specification: **12.07.89**

(51) Int. Cl.⁴: **H 04 N 5/44**

(21) Application number: **86300130.1**

(22) Date of filing: **09.01.86**

(54) **Methods and apparatus for transferring data for digitally controlling video equipment.**

(30) Priority: **18.01.85 JP 6979/85**

(43) Date of publication of application:
**23.07.86 Bulletin 86/30**

(45) Publication of the grant of the patent:
**12.07.89 Bulletin 89/28**

(84) Designated Contracting States:
**AT DE FR GB NL**

(56) References cited:
**EP-A-0 089 731**
**US-A-4 338 632**

**ELECTRONIC ENGINEERING, vol. 56, no. 685,**
**January 1984, pages 41-48, London, GB; T.**
**DANBURY et al.: "Small area networks using**
**serial data transfer"**

(73) Proprietor: **SONY CORPORATION**
**7-35 Kitashinagawa 6-Chome Shinagawa-ku**
**Tokyo 141 (JP)**

(72) Inventor: **Mogi, Takao c/o Patents Division**
**Sony Corporation 6-7-35 Kitashinagawa**
**Shinagawa-ku Tokyo 141 (JP)**
Inventor: **Suematsu, Masayuki c/o Patents**
**Division**
**Sony Corporation 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

## Description

This invention relates to methods and apparatus for transferring data for digitally controlling video equipment, such as television receivers and video tape recording apparatus (VTRs), the circuit blocks of which are digitally controllable.

Video and audio equipment incorporating an internal bus and internal circuit blocks which are digitally controlled is well known. We have previously proposed a control method and apparatus for various electronic equipments having internal bus lines using a computer externally connected to the internal bus line in our EP—A—0 172 640 (European Patent Application No. 85304852.8 which corresponds to Japanese Patent Application Serial No. 59/145658).

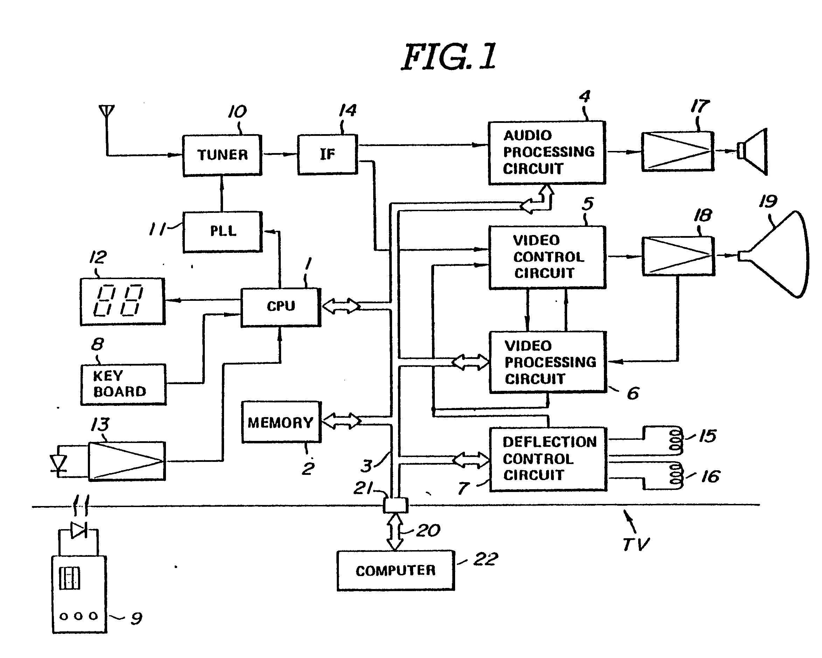

Figure 1 of the accompanying drawings shows an example of the control apparatus disclosed in the above European Patent Application applied to a television receiver TV. The present invention is also applicable to this example.

Referring to Figure 1, the television receiver TV is provided with a central processing unit (CPU) 1, a memory 2 and an internal bus line 3. An audio processing circuit 4, a video control circuit 5, a video processing circuit 6, and deflection control circuit 7 are all digitally controlled.

During normal operation, the CPU 1 controls a phase-locked loop (PLL) circuit 11 which controls a tuner 10 and the other circuits 4 to 7 in accordance with instructions issued via a keyboard 8 or remote controller 9. Consequently, manually entered values for frequency tuning, volume adjustments, picture adjustment, and the like may be displayed on, for example, a display unit 12. The television receiver TV also includes a remote control signal receiver 13, an intermediate frequency amplifier 14, deflection coils 15 and 16, an audio output amplifier 18, and a cathode ray tube (CRT) 19. A computer 22 which is connected to the bus line 3 via a bus line 20 and a connector 21, or the remote controller 9, is used for testing and adjustment during manufacture or repair. Control items for control or adjustment include, for example, beam deflections such as width, linearity, and pin-cushion distortion of raster in both horizontal and vertical directions, colour adjustments such as white balance, cut-off points, gain of R (red), G (green), and B (blue) signals, and grid bias adjustment of the CRT 19.

During adjustment of the television receiver TV or other video equipment, control signals are sent from the CPU1 or the externally connected computer 22 to each of the circuits 4 to 7. When output signals are, in turn, sent from each circuit 4 to 7 to the CPU 1 or the computer 22, the control items for data indicating the control conditions of each circuit 4 to 7 are transmitted in synchronization with a clock pulse signal. In this case, as the frequency of the clock signal is made higher, radiation disturbances appearing on a screen of the CRT 19 (or the display unit 12) become large, due to noise generated from such a high frequency clock pulse signal.

To avoid such noise disturbances, usually the frequency of the clock pulse signal has to be made as low as possible, or the transmission of data has to be carried out only during a vertical blanking interval of the television signal. However, the former method reduces the transmission efficiency of the data, and the latter method substantially reduces the usable time.

Electronic Engineering, January 1984, no 685, pages 41 to 48 discloess I²C bus equipment in which data can be transferred over a bus in, for example, a television set, and mentions that a slave can be switched to scan the line more frequently.

According to the present invention there is provided a method of transferring data in a digitally controlled video equipment having an internal bus, comprising the steps of:

producing a first clock pulse signal having a first frequency; and

transferring data between digital processing means and at least one digitally controlled circuit in the video equipment via the internal bus using said first clock pulse signal;

characterised by the steps of:

producing a second clock pulse signal having a second frequency, said first frequency being higher than said second frequency;

transferring data between said digital processing means and at least one said digitally controlled circuit in said video equipment via the internal bus using said second clock pulse signal; and

selecting said first clock pulse signal during vertical blanking intervals of the television signals in said video equipment and said second clock pulse signal during intervals other than said vertical blanking intervals.

According to the present invention there is also provided apparatus for transferring data in a digitally controlled video equipment, the apparatus comprising:

an internal bus;

first means for producing a first clock pulse signal having a first frequency;

second means for transferring data between digital processing means and at least one digitally controllable circuit in the video equipment using said first clock pulse signal;

characterized by:

third means for producing a second clock pulse signal having a second frequency, said first frequency being higher than said second frequency; and

means operable such that said second means transfers data between said digital processing means and at least one said digitally controllable circuit in said video equipment via said internal bus using said first clock pulse signal during vertical blanking intervals of the television signals in said video equipment and said second clock pulse signal during intervals of time other than the vertical blanking intervals.

The invention will now be described by way of example with reference to the accompanying drawings, throughout which like parts are referred to by like references, and in which:

Figure 1 is a schematic circuit block diagram of an arrangement for digitally controlling TV apparatus as disclosed in the above European patent application, and to which the present invention is applicable;

Figure 2 is a schematic circuit block diagram of an embodiment of apparatus for transmitting data and according to the present invention; and

Figure 3 is a signal timing chart for explaining the operation of the embodiment of Figure 2.

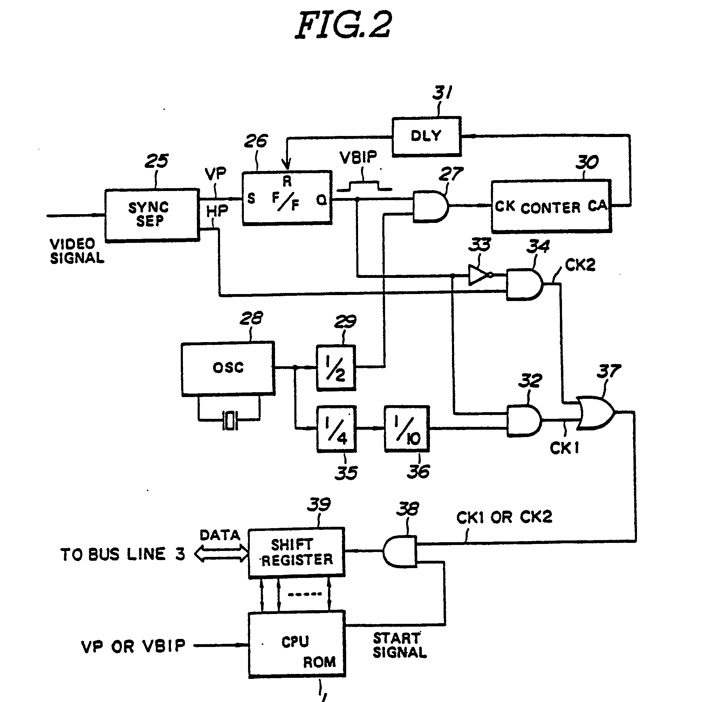

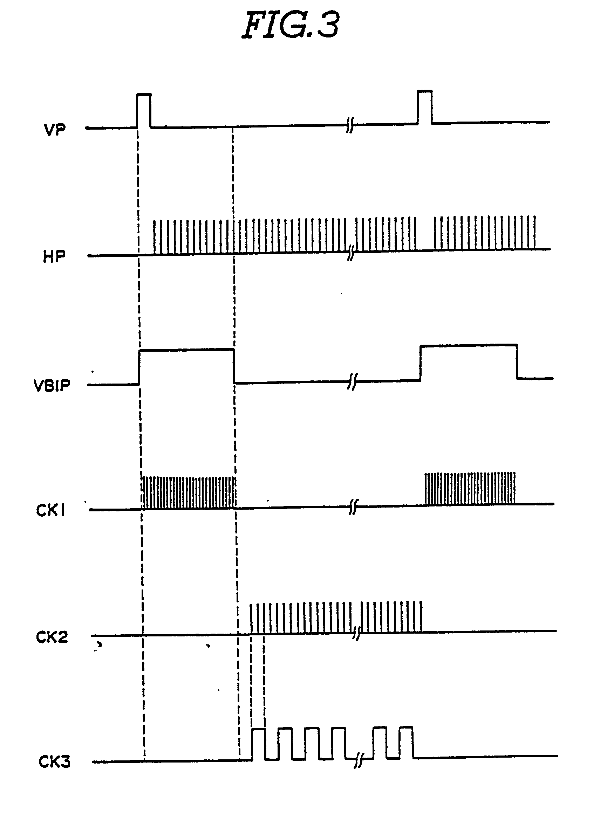

In Figure 2, a synchronizing signal separator 25 separates from an input video signal a vertical synchronizing signal VP and a horizontal synchronizing signal HP as shown in Figure 3. A flip-flop circuit 26 is set at a rising edge of the signal VP, and its Q output is turned to an "H" level and supplied to a first input terminal of an AND gate circuit 27. A second input terminal of the AND gate circuit 27 receives a pulse signal having a frequency of, for example, 2 MHz, derived from a 1/2 divider 29 in which a pulse signal having a frequency of 4 MHz produced from a reference pulse oscillator 28 is divided by two.

The pulse signal having the frequency of 2 MHz is enabled to pass through the AND gate circuit 27 during the "H" level of the Q output of the flip-flop circuit 26, and is counted by a counter 30.

When the count value of the counter 30 reaches a predetermined value, a carry pulse is supplied to a delay circuit (DLY) 31 to correct the output timing of the carry pulse. Thereafter, the delayed carry pulse resets the flip-flop circuit 26. Consequently, a vertical blanking pulse VBIP shown in Figure 3 is produced from the flip-flop circuit 26 as its Q output.

The vertical blanking pulse VBIP is supplied to a first terminal of an AND gate circuit 32, and to a first input terminal of another AND gate circuit 34 via an inverter 33. A second input terminal of the AND gate circuit 32 receives a pulse signal having a frequency of 100 KHz produced as a result of a series of frequency divisions by four and then of the pulse signal generated by the reference pulse oscillator 28 by means of a 1/4 divider 35 and 1/10 divider 36.

The pulse signal having the frequency of 100 KHz is enabled to pass through the AND gate circuit 32 only during the vertical blanking interval to produce a high speed clock signal CK1 shown in Figure 3. The second input terminal at the AND gate circuit 34 receives the above-described signal HP. The signal HP passed through the AND gate circuit 34 during intervals of time other than the vertical blanking intervals becomes a low speed clock signal CK2. One of these clock signals CK1 and CK2 is selectively supplied to a first input terminal of an AND gate circuit 38 via an OR gate circuit 37.

Although data transmission or reception is carried out via the bus line 3 shown in Figure 1 to or from each controlled circuit 4 to 7, these transferred data are converted from a bit serial form to a bit parallel form and vice versa by means of a shift register 39 connected between the bus line 3 and the CPU 1. The shift register 39 is actuated in response to the above-described clock signal CK1 or CK2 when a start command signal is supplied from the CPU 1 to the AND gate circuit 38.

Consequently, the data are transmitted or received to or from any of the circuits 4 to 7 at a high rate during the vertical blanking interval, and are transmitted at a low rate in synchronization with the signal HP. It should be noted that the signal VP or pulse VBIP is supplied to the CPU 1, in which the start command signal is produced based on the signal VP or the pulse VBIP.

Although in the preferred embodiment described above the low speed clock signal CK2 is substantially equal in frequency to the signal HP, the clock signal CK2 may alternatively be derived from, for example, a pulse signal synchronized with the signal HP, as shown by the pulse signal CK3 of Figure 3.

During the vertical blanking intervals and during intervals other than the vertical blanking intervals, data having a plurality of blocks can efficiently be transmitted. However, the data of one block is, in principle, not transmitted over both intervals of time. Furthermore, the data to be transmitted using the high speed clock signal CK1 are data requiring a higher response, such as those for channel selection control.

Thus, in the described embodiment, data is transferred at a high speed during the vertical blanking intervals and at a low speed and in synchronization with the signal HP. Therefore the data can be transmitted at high speed and with high transmission efficiency overall. In addition, unnecesssary radiation disturbances will not appear on the screen.

The present invention is also applicable to video equipment, such as a VTR, other than a television receiver.

**Claims**

1. A method of transferring data in a digitally controlled video equipment (TV) having an internal bus (3), comprising the steps of:

producing a first clock pulse signal (CK1) having a first frequency; and

transferring data between digital processing means (1) and at least one digitally controlled circuit (4 to 7) in the video equipment (TV) via the internal bus (3) using said first clock pulse signal (CK1);

characterized by the steps of:

producing a second clock pulse signal (CK2) having a second frequency, said first frequency being higher than said second frequency;

transferring data between said digital processing means (1) and at least one said digitally controlled circuit (4 to 7) in said video equipment (TV) via the internal bus (3) using said second clock pulse signal (CK2); and

selecting said first clock pulse signal (CK1) during vertical blanking intervals of the television signals in said video equipment (TV) and said second clock pulse signal (CK2) during intervals other than said vertical blanking intervals.

2. A method according to Claim 1 comprising the steps of:

providing first means (26, 28, 32) for generating said first clock pulse signal (CK1);

providing second means (25, 26, 34) for producing a signal indicative of the vertical blanking intervals from an input television signal; and

deriving a logical AND between said first clock pulse signal (CK1) and the signal produced by said second means (25, 26, 34).

3. A method according to Claim 2 comprising the step of:

deriving a logical AND between a horizontal synchronizing signal separated from an input television signal and an inverted signal of the signal produced by said second means (25, 26, 34), whereby said second clock pulse signal (CK2) is produced.

4. A method according to Claim 2 wherein said first clock pulse signal (CK1) is generated from a reference pulse oscillator (28).

5. A method according to Claim 4 wherein the frequency of said first clock pulse signal (CK1) is 100 KHz.

6. A method according to claim 2 comprising the steps of:

producing said second clock pulse signal (CK2) which is synchronized with a horizontal synchronizing signal (HP) separated from an input television signal and has a lower frequency than the horizontal synchronizing signal (HP); and

deriving a logical AND between said second clock pulse signal (CK2) and an inverted signal of said second means (25, 26, 34) indicative of the intervals other than the vertical blanking intervals.

7. Apparatus for transferring data in a digitally controlled video equipment (TV), the apparatus comprising:

an internal bus (3);

first means (26, 28, 32) for producing a first clock pulse signal (CK1) having a first frequency;

second means (20, 3) for transferring data between digital processing means (1) and at least one digitally controllable circuit (4 to 7) in the video equipment (TV) using said first clock pulse signal (CK1);

characterized by:

third means (25, 26, 34) for producing a second clock pulse signal (CK2) having a second frequency, said first frequency being higher than said second frequency; and

means (32, 34, 37) operable such that said second means (20, 3) transfers data between said digital processing means (1) and at least one said digitally controllable circuit (4 to 7) in said video equipment (TV) via said internal bus (3) using said first clock pulse signal (CK1) during vertical blanking intervals of the television signals in said video equipment (TV) and said second clock pulse signal (CK2) during intervals of time other than the vertical blanking intervals.

8. Apparatus according to Claim 7 wherein said second clock pulse signal (CK2) is derived from a horizontal synchronizing signal (HP) separated from an input television signal.

9. Apparatus according to Claim 7 wherein said second clock pulse signal (CK2) is derived from a signal synchronized with a horizontal synchronizing signal (HP) separated from an input television signal.

10. Apparatus according to Claim 7 wherein said first means (26, 28, 32) comprises a reference clock oscillator (28) for generating a reference clock having a predetermined clock frequency and means (35, 36) for dividing the reference clock down to said first frequency.

11. Apparatus according to Claim 10 wherein said predetermined clock frequency is 4 MHz and said dividing means (35, 36) comprises a 1/4 divider (35) and a 1/10 divider (36).

**Patentansprüche**

1. Verfahren zur Datenübertragung in einer digital gesteuerten Videoanlage (TV) mit einem internen Bus (3),

bei dem ein erstes Taktimpulssignal (CK1) mit einer ersten Frequenz erzeugt wird,

und bei dem zwischen einer digitalen Prozessoreinrichtung (1) und wenigstens einer digital gesteuerten Schaltung (4 bis 7) in der Videoanlage (TV) über den internen Bus (3) Daten unter Verwendung des ersten Taktimpulssignals (CK1) übertragen werden,

gekennzeichnet durch die Verfahrensschritte,

daß ein zweites Taktimpulssignal (CK2) mit einer zweiten Frequenz erzeugt wird, wobei die erste Frequenz größer ist als die zweite Frequenz,

daß zwischen der digitalen Prozessoreinrichtung (1) und wenigstens einer der digital steuerbaren Schaltungen (4 bis 7) in der Videoanlage (TV) über den internen Bus (3) Daten unter Verwendung des zweiten Taktimpulssignals (CK2) übertragen werden,

und daß das erste Taktimpulssignal (CK1) während der vertikalen Austastintervalle der Fernsehsignale in der Videoanlage (TV) und das zweite Taktimpulssignal (CK2) während der außerhalb der vertikalen Austasgintervalle liegenden Intervalle des Fernsehsignals ausgewählt wird.

2. Verfahren nach Anspruch 1 mit den Verfahrensschritten,

daß eine erste Einrichtung (26, 28, 32) zur Erzeugung des ersten Taktimpulssignals (CK1) vorgesehen wird,

daß eine zweite Einrichtung (25, 26, 34) vorgesehen wird, die zur Erzeugung eines Signals dient, das die vertikalen Austastintervalle eines Fernseheingangssignals kennzeichnet,

und daß eine logische UND-Verknüpfung zwischen dem ersten Taktimpulssignal (CK1) und dem von der zweiten Einrichtung (25, 26, 34) erzeugten Signal hergestellt wird.

3. Verfahren nach Anspruch 2 mit dem Verfahrensschritt,

daß eine logische UND-Verknüpfung zwischen einem aus dem Fernseheingangssignal abgetrennten horizontalen Synchronisiersignal und einem durch Invertierung des von der zweiten Einrichtung (25, 26, 34) erzeugten Signals abgeleiteten invertierten Signal hergestellt und dadurch das zweite Taktimpulssignal (CK2) erzeugt wird.

4. Verfahren nach Anspruch 2, bei dem das erste Taktimpulssignal (CK1) von einem Referenzimpulsoszillator (28) erzeugt wird.

5. Verfahren nach Anspruch 4, bei dem die Frequenz des ersten Taktimpulssignals (CK1) 100 kHz beträgt.

6. Verfahren nach Anspruch 2 mit dem Verfahrensschritten,

daß das zweite Taktimpulssignal (CK2) mit einem aus einem Fernseheingangssignal abgetrennten horizontalen Synchronisiersignal (HP) synchronisiert wird und eine Frequenz hat, die kleiner ist als diejenige des horizontalen Synchronisiersignals (HP),

und daß eine logische UND-Verknüpfung zwischen dem zweiten Taktimpulssignal (CK2) und einem invertierten Signal der zweiten Einrichtung (25, 26, 34) hergestellt wird, das für die Intervalle kennzeichnend ist, die außerhalb der vertikalen Austastintervalle liegen.

7. Vorrichtung zur Datenübertragung in einer digital gesteuerten Videoanlage (TV)

mit einem internen Bus (3),

mit einer ersten Einrichtung (26, 28, 30) zur Erzeugung eines ersten Taktimpulssignals (CK1) mit einer ersten Frequenz,

mit einer zweiten Einrichtung (20, 3) zur Übertragung von Daten zwischen einer digitalen Prozessoreinrichtung (1) und wenigstens einer digital steuerbaren Schaltung (4 bis 7) in der Videoanlage (TV) unter Verwendung des ersten Taktimpulssignals (CK1),

gekennzeichnet durch

eine dritte Einrichtung (25, 26, 34) zur Erzeugung eines zweiten Taktimpulssignals (CK2) mit einer zweiten Frequenz, wobei die erste Frequenz größer ist als die zweite Frequenz,

und eine Einrichtung (32, 34, 37), die so betrieben werden kann, daß die zweite Einrichtung (20, 3) die Daten zwischen der digitalen Prozessoreinrichtung (1) und wenigstens einer der digital steuerbaren Schaltungen (4 bis 7) in der Videoanlage (TV) über den internen Bus (3) während der vertikalen Austastintervalle der Fernsehsignale der Videoanlage (TV) unter Verwendung des ersten Taktimpulssignals (CK1) und während der außerhalb der ersten Austastintervalle liegenden Intervalle unter Verwendung des zweiten Taktimpulssignals (CK2) überträgt.

8. Vorrichtung nach Anspruch 7, bei der das zweite Taktimpulssignal (CK2) aus dem von einem Fernseheingangssignal abgetrennten horizontalen Synchronisiersignal (HP) abgeleitet wird.

9. Vorrichtung nach Anspruch 7, bei der das zweite Taktimpulssignal (CK2) aus einem Signal abgeleitet wird, das mit dem von einem Fernseheingangssignal abgetrennten horizontalen Synchronisiersignal synchronisiert ist.

10. Vorrichtung nach Anspruch 7, bei dem die erste Einrichtung (26, 28, 32) eine Referenztaktgenerator (28) zur Erzeugung eines Referenztakts mit einer vorbestimmten Taktfrequenz sowie eine Teileranordnung (35, 36) zur Herunterteilung des Referenztakts auf die genannte erste Frequenz aufweist.

11. Vorrichtung nach Anspruch 10, bei der die vorbestimmte Taktfrequenz 1 MHz beträgt und die Teileranordnung (35, 36) einen 1:4-Teiler (35) und einen 1:10-Teiler (36) enthält.

**Revendications**

1. Procédé de transfert de données dans un équipement vidéo commandé numériquement (TV) comportant un bus interne (3), consistant à:

produire un premier signal pulsé d'horloge (CK1) ayant une première fréquence; et à

transférer des données entre un moyen de traitement numérique (1) et au moins un circuit commandé numériquement (4 à 7) inclus dans l'équipement vidéo (TV) par le bus interne (3) en mettant en oeuvre le premier signal pulsé d'horloge (CK1);

caractérisé en ce qu'il consiste à:

produire un deuxième signal pulsé d'horloge (CK2) ayant une deuxième fréquence, la première fréquence étant supérieure à la deuxième fréquence;

transférer des données entre le moyen de traitement numérique (1) et au moins un circuit commandé numériquement (4 à 7) inclus dans l'équipement vidéo (TV) par le bus interne (3) en mettant en oeuvre le deuxième signal pulsé d'horloge (CK2); et à

sélectionner le premier signal pulsé d'horloge (CK1) pendant les intervalles de suppression de trame des signaux de télévision dans l'équipement vidéo (TV) et le deuxième signal pulsé d'horloge (CK2) pendant les intervalles autres que les intervalles de suppression de trame.

2. Procédé selon la revendication 1, consistant à:

prévoir un premier moyen (26, 28, 32) pour engendrer le premier signal pulsé d'horloge (CK1);

prévoir un deuxième moyen (25, 26, 34) pour produire un signal indiquant les intervalles de suppression de trame à partir d'un signal de télévision d'entrée; et à

dériver un signal de combinaison logique ET entre le premier signal pulsé d'horloge (CK1) et le signal produit par le deuxième moyen (25, 26, 34).

3. Procédé selon la revendication 2, consistant à:

dériver un signal de combinaison logique ET entre un signal de synchronisation horizontale séparé d'un signal de télévision d'entrée et un signal inversé du signal produit par le deuxième moyen (25, 26, 34), en produisant ainsi le deuxième signal pulsé d'horloge (CK2).

4. Procédé selon la revendication 2, dans lequel le premier signal pulsé d'horloge (CK1) est engendré par un oscillateur à impulsions de référence (28).

5. Procédé selon la revendication 4, dans lequel la fréquence du premier signal pulsé d'horloge (CK1) est égale à 100 KHz.

6. Procédé selon la revendication 2, consistant à:

produire le deuxième signal pulsé d'horloge (CK2) qui est synchronisé avec un signal de synchronisation horizontale (HP) séparé d'un signal de télévision d'entrée et a une fréquence inférieure à cell du signal de synchronisation horizontale (HP); et à

dériver un signal de combinaison logique ET entre le deuxième signal pulsé d'horloge (CK2) et un signal inversé du deuxième moyen (25, 26, 34) indiquant les intervalles autres que les intervalles de suppression de trame.

7. Dispositif pour transférer des données dans un équipement vidéo commandé numériquement (TV), le dispositif comprenant:

un bus interne (3);

un premier moyen (26, 28, 32) pour produire un premier signal pulsé d'horloge (CK1) ayant une première fréquence;

un deuxième moyen (20, 3) pour transférer des données entre un moyen de traitement numérique (1) et au moins un circuit contrôlable numériquement (4 à 7) inclus dans l'équipement vidéo (TV) en mettant en oeuvre le premier signal pulsé d'horloge (CK1); caractérisé par:

un troisième moyen (25, 26, 34) pour produire un deuxième signal pulsé d'horloge (CK2) ayant une deuxième fréquence, la première fréquence étant supérieure à la deuxième fréquence; et

un moyen (32, 34, 37) pouvant être mis en fonctionnement de telle sorte que le deuxième moyen (20, 3) transfère des données entre le moyen de traitement numérique (1) et au moins un circuit contrôlable numériquement (4 à 7) inclus dans l'équipement vidéo (TV) par le bus interne (3) en mettant en oeuvre le premier signal pulsé d'horloge (CK1) pendant les intervalles de suppression de trame des signaux de télévision dans l'équipement vidéo (TV) et le deuxième signal pulsé d'horloge (CK2) pendant les intervalles de temps autres que les intervalles de supresion de trame.

8. Dispositif selon la revendication 7, dans lequel le deuxième signal pulsé d'horloge (CK2) est dérivé d'un signal de synchronisation horizontale (HP) séparé d'un signal de télévision d'entrée.

9. Dispositif selon la revendication 7, dans lequel le deuxième signal pulsé d'horloge (CK2) est dérivé d'un signal synchronisé avec un signal de synchronisation horizontale (HP) séparé d'un signal de télévision d'entrée.

10. Dispositif selon la revendication 7, dans lequel le premier moyen (26, 28, 32) comprend un oscillateur à impulsions d'horloge de référence (28) pour engendrer un signal d'horloge de référence ayant une fréquence d'horloge prédéterminée et un moyen (35, 36) pour diviser la fréquence d'horloge de référence afin de la réduire à la première fréquence.

11. Dispositif selon la revendication 10, dans lequel la fréquence d'horloge prédéterminée est égale à 4 MHz et le moyen de division (35, 36) comprend un diviseur de 1/4 (35) et un diviseur de 1/10 (36).

FIG.1

## FIG.2

# FIG.3